# EUROPÄISCHE PATENTSCHRIFT

(11) **EP 2 772 161 B1**
(45) Veröffentlichungstag und Bekanntmachung des Hinweises auf die Patenterteilung: **03.05.2017**
(21) Anmeldenummer: 14156796.6
(22) Anmeldetag: 26.02.2014
(51) Int. Cl.: A47J 37/06

(54) **Grillvorrichtung**
Grill device
Dispositif de grill

(30) Priorität: 27.02.2013 CH 5172013
(43) Veröffentlichungstag der Anmeldung: 03.09.2014
(73) Patentinhaber: Mifroma SA, 1670 Ursy (CH)
(72) Erfinder: Jaquier, Claude, 1678 Siviriez (CH); Etienne, Denis, 1670 Ursy (CH); Sallin, Stephanie, 1670 Ursy (CH)
(74) Vertreter: Hepp Wenger Ryffel AG

(56) Entgegenhaltungen:
- EP-A1- 1 532 908
- EP-A2- 1 138 236
- CH-A5- 613 613
- DE-A1- 3 522 209
- DE-U1- 9 209 649
- FR-A1- 2 376 647

## Beschreibung

Die Erfindung betrifft eine Grillvorrichtung, insbesondere zur Zubereitung von Raclette, gemäss dem Oberbegriff des unabhängigen Anspruchs 1.

Die Zubereitung von Grillgerichten direkt am Tisch erfreut sich, insbesondere auch im Heimbereich, seit längerem grosser Beliebtheit. Ein derartiges Gericht ist z.B. das bekannte Schweizer Nationalgerichte "Raclette", bei dessen Zubereitung Käse geschmolzen wird.

Bei dieser Zubereitung von Grillgerichten kommen typischerweise Grillvorrichtungen in der Form von Tischöfen zur Anwendung. Derartige Tischöfen sind meist als Elektro-Öfen ausgebildet und weisen eine Heizvorrichtung und einen Grillgutträger auf, in welchem das Grillgut angeordnet werden kann. Im Falle einer Variante von "Raclette" wird der Käse im Grillgutträger angeordnet, meist eingespannt, und unter der Heizvorrichtung platziert. Nachdem die oberste Käseschicht geschmolzen und gegebenenfalls leicht angebräunt ist, wird der Käse von der Heizquelle entfernt und "raclettiert", d.h. die geschmolzene Käseschicht wird mit einem Spachtel, dem so genannten Raclettemesser, oder anderen Hilfsmitteln z.B. auf einen Teller abgestrichen.

Derartige Grillvorrichtungen weisen meist eine Vorrichtung zur Regulierung eines Abstandes zwischen dem Grillgut und der Heizvorrichtung auf. Je nach Grillvorrichtung wird hierzu entweder die Heizvorrichtung oder der Grillgutträger bewegt, während das jeweils andere Teil feststehend angeordnet ist. Da die Heizvorrichtung wegen der Hitzeentwicklung in der Regel heikler zu manipulieren ist, wird meist der Grillgutträger von der Heizvorrichtung weg oder zu dieser hin bewegt. Diese Variante hat aber den Nachteil, dass sich der Grillgutträger bei der Ausgabe des Grillguts, d.h. z.B. beim Abstreichen des Käses, auf unterschiedlichen Höhen über dem Tisch befindet. Dies erschwert die Ausgabe des Grillguts.

Grundsätzlich sind daher Grillvorrichtungen zu bevorzugen, bei welchen die Heizvorrichtung verstellbar ist, während der Grillgutträger auf einer festen Höhe angeordnet ist. Eine derartige Grillvorrichtung ist z.B. aus der FR 2 376 647 bekannt. Die Heizvorrichtung sowie der Grillgutträger sind dabei an einer gemeinsamen Trägersäule angeordnet. Die Heizvorrichtung ist über eine Feststellschraube an der Trägersäule auf einer gewünschten Höhe feststellbar. Zum Verstellen der Heizvorrichtung muss die Feststellschraube gelöst werden. Der Grillgutträger ist auf fester Höhe angeordnet und kann zur Ausgabe um eine horizontale Achse gekippt werden, sodass der Käse abgestrichen werden kann.

Ein Nachteil dieser Vorrichtung liegt darin, dass die Heizvorrichtung zum Verstellen mit beiden Händen ergriffen werden muss. Hierzu müssen entsprechende Griffe an der Heizvorrichtung vorhanden sein, damit sich ein Benutzer nicht verbrennt. Auch trotz der Griffe ist das Verstellen meist zumindest unangenehm und es besteht das Risiko, dennoch an das heisse Gehäuse der Heizvorrichtung anzustossen. Wird die Heizvorrichtung bei gelöster Feststellschraube losgelassen, kann die Heizvorrichtung zudem auf das Grillgut fallen. Ebenso besteht beim Abstreichen des Käses eine Verletzungsgefahr, da der Grillguthalter zwar gekippt werden kann, dabei aber unter der Heizvorrichtung verbleibt. Nicht zuletzt muss vor der Ausgabe des Grillguts mühselig jeweils ein Teller in den Bereich der Heizvorrichtung gebracht werden, damit der Käse gezielt auf diesen abgestrichen werden kann.

Aus der DE 9209649 U1 ist eine Grillvorrichtung mit einer in der Höhe einstellbaren Heizvorrichtung bekannt, bei welcher eine Trägersäule zweiteilig ausgebildet ist und mit einem Rasthebel versehen ist. Weitere Stand der Technik Dokumente sind: DE3522209, FR2376647, CH613613, EP1532908, EP1138236. Es ist daher die Aufgabe der Erfindung, die Nachteile des Standes der Technik zu überwinden. Insbesondere ist es eine Aufgabe der Erfindung, eine Grillvorrichtung, insbesondere zur Zubereitung von Raclette, bereitzustellen, welche bei einer hohen Betriebssicherheit einfach und zuverlässig in der Handhabung ist. Zudem soll die Grillvorrichtung einfach und kostengünstig in der Herstellung sein.
Diese Aufgaben werden durch die Merkmale des unabhängigen Anspruchs 1 gelöst. Dieser betrifft eine Grillvorrichtung, insbesondere zur Zubereitung von Raclette, umfassend einen Standsockel, eine ortsfest am Standsockel angeordneten Trägersäule mit einer Längsrichtung, eine Heizvorrichtung, welche an der Trägersäule angeordnet ist und einen Schwenkarm mit einem Grillgutträger, welcher zwischen der Heizvorrichtung und dem Standsockel an der Trägersäule angeordnet ist. Dabei ist die Heizvorrichtung zum Einstellen eines gewünschten Abstands zwischen der Heizvorrichtung und dem Grillgutträger längs der Trägersäule durch einen Benutzer verstellbar angeordnet. Die Erfindung zeichnet sich dadurch aus, dass die Trägersäule zweiteilig ausgebildet ist, wobei ein beweglicher Säulenabschnitt der Trägersäule, an welchem die Heizvorrichtung angeordnet ist, gegenüber einem bezüglich des Standsockels feststehenden Säulenabschnitt der Trägersäule in deren Längsrichtung verschiebbar geführt ist.
Die Trägersäule ist im Allgemeinen weitgehend senkrecht zu einer Standfläche des Standsockels angeordnet, mit welchem die Grillvorrichtung z.B. auf einem Tisch platziert werden kann. Die Heizvorrichtung ist in diesem Fall in einem oberen Bereich der Grillvorrichtung angeordnet während der Standsockel unten angeordnet ist. Der Schwenkarm sowie der zugehörige Grillgutträger sind in diesem Fall unterhalb der Heizvorrichtung anordenbar bzw. angeordnet. Es versteht sich, dass der Sockel nicht mit der gesamten Standfläche auf der Unterlage angeordnet zu sein braucht, sondern einzelne Auflagepunkte an der Standfläche wie z.B. feste oder verstellbare Standfüsse vorgesehen sein können.

Auf dem Grillgutträger angeordnetes Grillgut kann somit von oben her mit Hitzestrahlung beaufschlagt und damit gegrillt werden. Als Grillgut kann z.B. Fleisch oder Gemüse dienen. Bevorzugt kommt die Grillvorrichtung allerdings zum Schmelzen von Käse, insbesondere zur Zubereitung von Raclette, zum Einsatz. Besonders eignet sich die Grillvorrichtung für eine Raclette-Variante, bei welcher ein Käselaib in den Grillgutträger z.B. eingespannt wird und jeweils nur die oberste Schicht geschmolzen und zur Ausgabe abgestrichen wird. Zur Ausgabe ist der Grillgutträger mit dem Schwenkarm aus einem Bereich unter der Heizvorrichtung ausschwenkbar.

Indem die Heizvorrichtung am beweglichen Säulenabschnitt befestigt ist, kann eine Höhe der im Betrieb heissen Heizvorrichtung oberhalb des Standsockels bzw. des Grillgutträgers ohne direkte Manipulation durch den Benutzer verstellt werden. Eine Verletzungsgefahr ist somit deutlich reduziert.

Das Einstellen des Abstandes durch Verstellen der Heizvorrichtung hat den Vorteil, dass der Grillgutträger auf einer festen Höhe und somit in einer für eine Ausgabe des Grillguts am Tisch geeigneten Höhe verbleiben kann. Selbstverständlich kann auch eine Höhe des Grillgutträgers oberhalb des Standsockels längs der Trägersäule verstellbar sein, um eine gewünschte Ausgabehöhe an die Gegebenheiten anpassen zu können.

Der Schwenkarm ist als Ausleger ausgebildet und ist derart gelagert, dass der Grillgutträger in einer vollen Kreisbewegung um eine Längsrichtung der Trägersäule schwenkbar ist. Bevorzugt ist der Schwenkarm weitgehend parallel zur Heizvorrichtung ausgerichtet, wenn er unter dieser angeordnet ist. Zur Ausgabe des Grillguts ist der Schwenkarm bevorzugt um einen Vollkreis um die Trägersäule schwenkbar. Dies hat den Vorteil, dass bei im Wesentlichen zentraler Anordnung der Trägersäule auf einem Tisch das Grillgut besonders einfach reihum ausgegeben werden kann. Mit Vorteil ist keine bevorzugte Schwenkrichtung vorgegeben, sodass das Grillgut in beide Schwenkrichtungen gleichermassen einfach ausgegeben werden kann.

Der Schwenkarm ist bevorzugt direkt an der Trägersäule gelagert. Hierzu kann z.B. ein kreiszylindrischer Rohrabschnitt als Manschette am feststehenden Trägersäulenteil angeordnet sein. Es versteht sich, dass der Schwenkarm nicht ausschliesslich an der Trägersäule gelagert zu sein braucht und zusätzlich z.B. an einer Oberseite des Standsockels abgestützt sein kann.

Der Grillgutträger ist ferner um zwei unterschiedliche, insbesondere rechtwinklig zueinander angeordnete, Achsen bezüglich des Schwenkarms schwenkbar an diesem gelagert. Auf diese Weise kann die Ausgabe des Grillguts besonders einfach erfolgen, da der Grillgutträger unabhängig von der Stellung des Schwenkarms in zwei Richtungen geschwenkt und/oder gekippt werden kann. Insbesondere das Abstreichen von geschmolzenem Käse kann damit besonders einfach erfolgen.

Vorzugsweise ist der bewegliche Säulenabschnitt als Hohlsäule ausgebildet und teleskopartig verschiebbar an dem feststehenden Säulenabschnitt geführt. Durch eine Ausbildung als Hohlsäule kann der bewegliche Säulenabschnitt hülsenartig über den feststehenden Säulenabschnitt geschoben angeordnet sein, wobei die beiden Säulenabschnitte in der Regel koaxial zueinander angeordnet sind. Auf diese Weise lässt sich besonders einfach eine Verschiebeführung in Längsrichtung der Trägersäule realisieren. Selbstverständlich können die beiden Säulenabschnitte auch auf andere Weise ausgebildet und aneinander geführt sein. Beispielsweise können die beiden Säulenabschnitte aussenseitige jeweils komplementäre Führungsschienen aufweisen, mit welchen sie aneinander geführt sind.

Der als Hohlsäule ausgebildete bewegliche Säulenabschnitt ist bevorzugt an einem sockelfernen Ende stirnseitig abgeschlossen. Durch den stirnseitigen Abschluss kann zum einen ein Anschlag zur Begrenzung eines relativen Verschiebewegs der beiden Säulenabschnitte bereitgestellt sein. Zum anderen können am stirnseitigen Abschluss z.B. leicht zugängliche Armaturen angeordnet sein, wie z.B. ein Schalter oder ein Betätigungselement zum relativen Verstellen der beiden Säulenabschnitte.

Selbstverständlich kann auch der feststehende Säulenabschnitt als Hohlsäule ausgebildet sein, um z.B. Teile einer Verstellvorrichtung zum relativen Verstellen des beweglichen Säulenabschnitts darin unterzubringen. Ebenso kann auf diese Weise z.B. eine Kabelzuführung innerhalb der Trägersäule realisiert sein.

Bevorzugt ist ein Querschnitt der Trägersäule, insbesondere des beweglichen Säulenabschnitts und/oder des feststehenden Säulenabschnitts, rechteckig, insbesondere quadratisch. Damit kann auf einfache Weise zusätzlich zur Verschiebeführung eine relative Verdrehsicherung der beiden Säulenabschnitte erreicht werden. Damit ist sichergestellt, dass der bewegliche Säulenabschnitt nicht ungewollt gegenüber dem feststehenden Säulenabschnitt um die Längsachse der Trägersäule verdreht und damit z.B. die Heizvorrichtung unkontrolliert ausgeschwenkt werden kann. Selbstverständlich kann eine Verdrehsicherung auch auf andere Weise bereitgestellt sein, z.B. durch andere polygonale Querschnitte, allgemein asymmetrische Säulenquerschnitte und/oder durch zusätzliche Mittel wie Führungsschienen.

Mit Vorteil weist die Grillvorrichtung eine Verstellvorrichtung auf, mit welcher der bewegliche Säulenabschnitt gegenüber dem feststehenden Säulenabschnitt von einem Benutzer bewegbar ist. Bevorzugt umfasst die Verstellvorrichtung eine Gewindespindel. In einer bevorzugte Ausführungsform ist der bewegliche Säulenabschnitt und der feststehende Säulenabschnitt der Trägersäule daher über eine Gewindespindel verbunden, welche um eine Spindelachse drehbar am beweglichen Säulenabschnitt abgestützt ist und in ein komplementär ausgebildetes Gewinde, welches fest am feststehenden Säulenabschnitt angeordnet ist, eingreift. Auf diese Weise kann eine Position des beweglichen Säulenabschnitts relativ zum feststehenden Säulenabschnitt mittels Drehung der Gewindespindel durch einen Benutzer komfortabel verstellt werden. Selbstverständlich kann in Varianten die Gewindespindel auch umgekehrt gelagert sein, d.h. am feststehenden Säulenabschnitt abgestützt sein, wobei in diesem Fall das komplementäre Gewinde am beweglichen Säulenabschnitt fest angeordnet ist.

Die drehbare Abstützung der Gewindespindel am entsprechenden Säulenabschnitt wird bevorzugt durch ein Drehlager erreicht, über welches die Gewindespindel am Säulenabschnitt gelagert ist. Mit Vorteil ist das Drehlager gegebenenfalls am stirnseitigen Abschluss des als Hohlsäule ausgebildeten beweglichen Säulenabschnitts angeordnet.

Bevorzugt ist in einem sockelfernen Endbereich der Trägersäule ein Drehknauf angeordnet, mit welchem die Gewindespindel von einem Benutzer um die Spindelachse drehbar ist. Der Drehknauf kann z.B. über ein Kegelradgetriebe in senkrechter Richtung zu einer Längsachse der Gewindespindel angeordnet sein. Bevorzugt sitzt der Drehknauf jedoch direkt auf der Gewindespindel, wobei die Spindelachse koaxial zu einer Längsachse der Trägersäule angeordnet ist. In diesem Fall ist der Drehknauf bevorzugt endseitig oberhalb des beweglichen Säulenabschnitts, gegebenenfalls am stirnseitigen Abschluss des als Hohlsäule ausgebildeten beweglichen Säulenabschnitts, angeordnet. Der auf der Trägersäule nach oben gerichtet angeordnet Drehknauf ist von allen Seiten der Grillvorrichtung her gut für einen Benutzer zugänglich.

Mit Vorteil verläuft die Gewindespindel zumindest teilweise in einem Innenraum des beweglichen Säulenabschnitts. Der Innenraum kann z.B. von dem als Hohlsäule ausgebildeten Säulenabschnitt bereitgestellt sein. Ebenso kann die Gewindespindel in Varianten in einem speziell dafür vorgesehenen Aufnahmeraum des beweglichen Säulenabschnitts angeordnet sein. Ein derartiger Aufnahmeraum kann z.B. als Radiallager für die Spindel ausgebildet sein. In andere Variante kann die Gewindespindel auch aussenseitig an der Trägersäule angeordnet sein.

In einer bevorzugten Ausführungsform ist die Heizvorrichtung mit einer Manschette an der Trägersäule befestigt, wobei die Manschette den beweglichen Säulenabschnitt der Trägersäule umfangsseitig vollständig umgreift und fest mit diesem verbunden ist. Auf diese Weise kann die Heizvorrichtung z.B. als separates Teil vorgefertigt und bei der Montage der Grillvorrichtung auf einfache Weise am beweglichen Säulenabschnitt befestigt werden. Zudem stellt die Manschette bei geeigneter Ausbildung sicher, dass Torsionsmomente bezüglich der Trägersäule von der Heizvorrichtung auf den beweglichen Säulenabschnitt übertragbar sind. Beispielsweise kann bei rechteckigem Querschnitt des beweglichen Säulenabschnitts die Manschette im Sinne einer Verdrehsicherung einen entsprechenden Querschnitt aufweisen. Typischerweise ist die Manschette aus demselben Material geformt, wie ein Gehäuse der Heizvorrichtung.

Bevorzugt ist die Heizvorrichtung in einem sockelnahen Längenbereich am beweglichen Säulenabschnitt befestigt, wobei der bewegliche Säulenabschnitt in Längsrichtung der Trägersäule vom Standsockel weg über die Heizvorrichtung hinausragt. Dies hat den Vorteil, dass in einem sockelfernen Endbereich der Trägersäule angeordnete Armaturen von der Heizvorrichtung beabstandet und somit angenehmer zu bedienen sind.

Bevorzugt umfasst die Heizvorrichtung ein zum Standsockel hin offenes Gehäuse, welches zwei zum Standsockel hin auseinander laufende Seitenwände aufweist. Das Gehäuse schützt somit einen Benutzer vor der Hitzeabstrahlung in unerwünschte Richtungen wie z.B. nach oben oder zur Seite. Indem zwei Seitenwände zum Standsockel hin auseinander laufen, können die Seitenwände als Reflektoren wirken, welche die Hitzestrahlung z.B. einer im Gehäuse angeordneten Heizspirale zum Standsockel hin umlenken, d.h. insbesondere zum Grillgut, wenn dieses in einen Bereich zwischen der Heizvorrichtung und dem Standsockel angeordnet ist. Bevorzugt laufen die Seitenwände unter Winkel kleiner als 90° auseinander, sodass sich eine fokussierende Wirkung ergibt.

Vorzugsweise ist die Heizvorrichtung als Ausleger ausgebildet und kragt von der Trägersäule aus. Gesamthaft hat die Heizvorrichtung, insbesondere das Gehäuse der Heizvorrichtung eine längliche Form und ist mit einem Endbereich an der Trägersäule angeordnet. Die als Ausleger ausgebildete Heizvorrichtung erstreckt sich bevorzugt quer, d.h. weitgehend senkrecht zur Längsrichtung der Trägersäule von dieser weg. Der Standsockel kann dabei eine in entsprechender Richtung längliche Ausbildung aufweisen, sodass die Grillvorrichtung nicht kippt. Es versteht sich, dass der Grillgutträger ebenfalls länglich ausgestaltet sein kann. Insbesondere bestehen im Falle einer Anwendung der Grillvorrichtung zur Zubereitung von Raclette aufgrund der üblichen Formen der Käselaibe gewisse Vorgaben an den Grillgutträger. Es versteht sich, dass in diesem Fall die Heizvorrichtung sowie der Grillgutträger in der Regel entsprechend bemessen ausgebildet sind.

Bevorzugt ist die Heizvorrichtung elektrisch betreibbar, wobei eine Zuführung von elektrischer Energie über einen Anschluss an einem trägersäulenfernen Bereich der Heizvorrichtung erfolgt. Insbesondere im Heimbereich ist ein Betrieb mit elektrischer Energie von Vorteil, da die erforderliche Stromversorgung meist durch ein Stromnetz sichergestellt ist. Selbstverständlich kann die Heizvorrichtung jedoch auch mit einem gasförmigen oder flüssigen Brennstoff betrieben werden. Damit kann die Grillvorrichtung auch unabhängig von einem Stromnetz z.B. in abgelegenen Berghütten benutzt werden.

Die Anordnung des Anschlusses für die Versorgung mit elektrischer Energie an einem trägersäulenfernen Bereich der Heizvorrichtung hat den Vorteil, dass eine angeschlossene Kabelzuführung ausserhalb eines Schwenkbereichs des Schwenkarms und des Grillgutträgers angeordnet sein kann. Auf diese Weise ist ein Ausschwenken des Grillgutträgers bei der Ausgabe des Grillguts nicht durch die Kabelzuführung behindert. Zudem ist keine Kabelzuführung z.B. in der Trägersäule erforderlich, welche aufwändiger in die Grillvorrichtung zu integrieren wäre. Selbstverständlich kann eine in die Trägersäule integrierte Kabelzuführung je nach Anforderung eine bevorzugte Variante darstellen.

Bevorzugt ist die Längsrichtung der Trägersäule im Wesentlichen senkrecht zu einer Standfläche des Standsockels angeordnet. Der Schwenkarm kann somit in einer zur Standfläche des Standsockels parallelen Ebene um die Trägersäule geschwenkt werden. Der Schwenkarm überstreicht somit eine ebene Unterlage, auf welcher die Grillvorrichtung mit der Standfläche angeordnet ist, in gleich bleibendem Abstand. Auf diese Weise können z.B. weitere Speisen und Zutaten in jedem Bereich unterhalb des Schwenkbereichs bis zu einer einheitlichen Höhe angeordnet werden.

Vorzugsweise ist eine der zwei unterschiedlichen Achsen eine zur Längsrichtung der Trägersäule parallele Hochachse und eine zweite der zwei unterschiedlichen Achsen eine zur Längsrichtung der Trägersäule senkrechte Querachse. Aufgrund der Lagerung um die Hochachse kann der Grillgutträger beim Verschwenken des Schwenkarms in einer konstanten Ausrichtung z.B. bezüglich des feststehenden Standsockels gehalten werden. Der Grillgutträger ist daher bevorzugt um einen Vollkreis um die Hochachse richtungsunabhängig drehbar.

Die Schwenkbarkeit um die Querachse ermöglicht das Kippen des Grillgutträgers in jeder Schwenkstellung des Schwenkarms, sodass das Grillgut besonders einfach ausgegeben werden kann. Mit Vorteil kann der Grillgutträger nur bis zu einem Grenzwinkel um die Querachse gekippt werden und stösst bei Erreichen des Grenzwinkels an einen Anschlag. Auf diese Weise wird verhindert, dass der Grillgutträger auf die Standunterlage wie z.B. die Tischplatte abgekippt werden kann. Der Grenzwinkel beträgt bevorzugt etwa 30° gegenüber einer Horizontalen. Zudem kann eine Feststellschraube am Grillgutträger vorhanden sein, mit welcher der Grillgutträger in einer gewünschten Kippstellung festgestellt werden kann. Insbesondere kann der Grillgutträger zum Grillen auch in einer horizontalen, d.h. nicht gekippten Stellung, festgestellt werden.

Bevorzugt ist dabei die Hochachse bezüglich des Schwenkarms fest und die Querachse bezüglich des Schwenkarms um die Hochachse drehbar angeordnet. Zur einfachen Manipulation kann der Grillgutträger Handgriffe aufweisen, bevorzugt an mehreren Stellen, sodass er von allen Seiten leicht bedient, d.h. ausgeschwenkt, gedreht und/oder gekippt, werden kann.

Weitere Vorteile können erzielt werden, wenn der Schwenkarm ein Doppelschwenkarm bestehend aus zwei um eine Gelenkachse gelenkig miteinander verbundenen Teilarmen ist, wobei der eine Teilarm gelenkig mit dem Standsockel oder mit der Tragsäule und der andere Teilarm insbesondere gelenkig mit dem Grillgutträger verbunden ist. Durch diese Anordnung kann der maximal mögliche Schwenkradius ersichtlicherweise vergrössert werden, ohne dass dabei die Handhabung erschwert wird.

Aus der nachfolgenden Detailbeschreibung und der Gesamtheit der Patentansprüche ergeben sich zudem weitere vorteilhafte Ausführungsformen und Merkmalskombinationen der Erfindung.

Die zur Erläuterung der Ausführungsbeispiele verwendeten Zeichnungen zeigen schematisch:
- Fig. 1:: eine seitliche Aussenansicht einer erfindungsgemässen Grillvorrichtung mit einer Teilschnittansicht einer Trägersäule;
- Fig. 2:: einen Ausschnitt eines Querschnitts durch die Trägersäule der Grillvorrichtung der Fig. 1;
- Fig. 3:: eine Draufsicht auf die Grillvorrichtung der Fig. 1;
- Fig. 4:: eine Ansicht in Richtung der Heizvorrichtung auf die Grillvorrichtung der Fig. 1;
- Fig. 5:: eine Draufsicht auf die Grillvorrichtung der Fig. 1, wobei ein Schwenkarm mit Grillguthalter in verschiedenen Schwenkstellungen dargestellt ist;
- Fig. 6:: einen Querschnitt durch ein alternatives Ausführungsbeispiel mit Doppelschwenkarm,
- Fig. 7:: eine Draufsicht auf die Vorrichtung gemäss Fig. 6,
- Fig. 8:: eine perspektivische Darstellung des Doppelschwenkarms an der Vorrichtung gemäss Fig. 6.

Grundsätzlich sind in den Figuren gleiche Teile mit gleichen Bezugszeichen versehen.

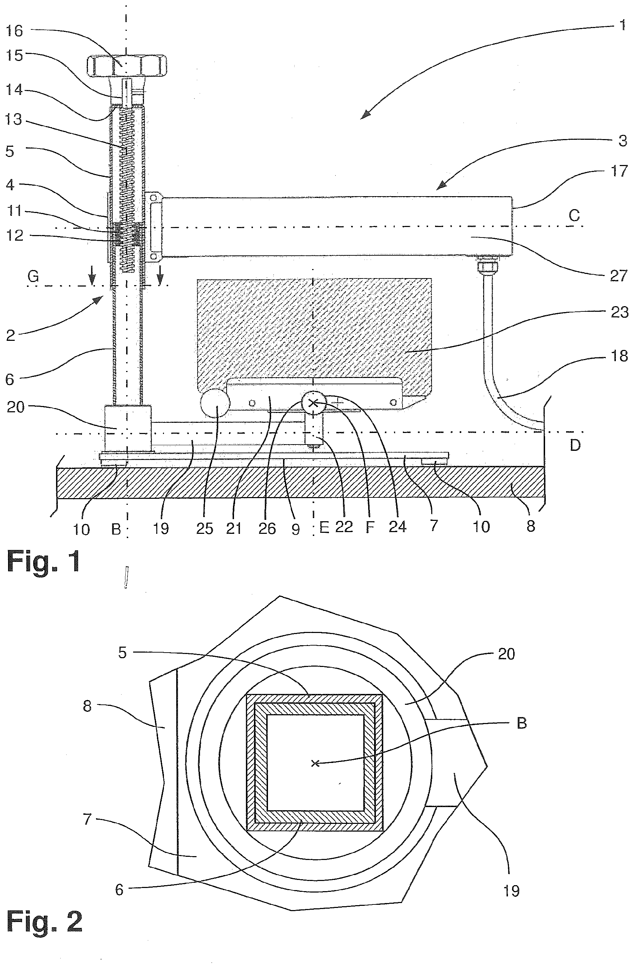

Figur 1 zeigt eine erfindungsgemässe Grillvorrichtung 1 in einer Seitenansicht von aussen. Eine Trägersäule 2 der Grillvorrichtung 1 ist in einer Schnittansicht dargestellt, wobei die Schnittebene A von einer Längsrichtung B der Trägersäule 2 und einer Längsrichtung C einer als länglicher Balken ausgestalteten Heizvorrichtung 3 aufgespannt ist. Ebenso ist eine Manschette 4 zur Befestigung der Heizvorrichtung 3 an einem beweglichen Säulenabschnitt 5 der Trägersäule 2 in einer Schnittansicht dargestellt.

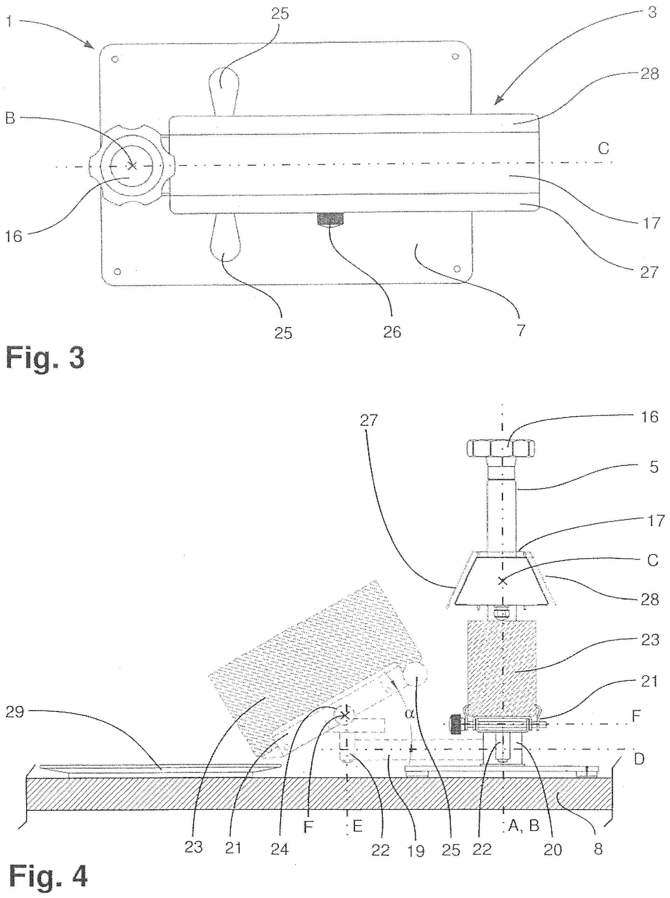

Die Trägersäule 2 ist mit einem feststehenden Säulenabschnitt 6 ortsfest an einem Standsockel 7 der Grillvorrichtung 1 befestigt. Der Standsockel 7 ist rechteckig ausgebildet (siehe Fig. 3) und weist zur Tischplatte 8 hin eine Standfläche 9 auf, an welcher vorliegend in allen vier Eckbereichen Standfüsse 10 angebracht sind. Die Standfüsse 10 können zum Nivellieren der Grillvorrichtung 1 z.B. über ein Gewinde am Standsockel 7 angebracht sein (nicht dargestellt). Eine Oberseite des Standsockels 7 ist weitgehend parallel zur Standfläche 9 ausgerichtet. Die Grillvorrichtung 1 ist gemäss der Darstellung der Fig. 1 mit dem Standsockel 7 auf einer Tischplatte 8 angeordnet.

Der bewegliche Säulenabschnitt 5 und der feststehende Säulenabschnitt 6 sind koaxial angeordnet, wobei die jeweiligen Längsachsen der Längsachse B der Trägersäule 2 entsprechen. Die Längsachse B der Trägersäule 2 ist unter einem rechten Winkel zur Standfläche 9 ausgerichtet. Der feststehende Säulenabschnitt 6 kann je nach Material und Ausbildung z.B. mit dem Standsockel 7 verschweisst, mit diesem verschraubt oder einstückig mit diesem ausgebildet sein. Der feststehende Säulenabschnitt 6 sowie der bewegliche Säulenabschnitt 5 sind als Hohlsäule ausgebildet und weisen vorliegend einen quadratischen Querschnitt auf (siehe Fig. 2). Dabei entspricht ein Aussenquerschnitt des feststehenden Säulenabschnitts 6 im Wesentlichen einem Innenquerschnitt des beweglichen Säulenabschnitts 5. Dabei ist ausreichend Spiel vorhanden, dass der bewegliche Säulenabschnitt 5 in Längsrichtung B teleskopartig über den feststehenden Säulenabschnitt 6 geschoben werden kann. Der bewegliche Säulenabschnitt 5 umgreift den feststehenden Säulenabschnitt 6 dabei aussenseitig in einem Überlappungsbereich.

An einem sockelfernen Längsende des feststehenden Säulenabschnitts 6 ist ein Einsatz 11 fest eingesetzt. Der Einsatz 11 weist eine Durchgangsöffnung in Richtung von B mit einem Innengewinde 12 auf. In das Innengewinde 12 greift eine Gewindespindel 13 mit einem entsprechenden Aussengewinde ein, welche sich vom Standsockel 7 weg längs B im Hohlraum des beweglichen Säulenabschnitts 5 erstreckt. Die Gewindespindel 13 erstreckt sich bis zu einem sockelfernen Längsende des beweglichen Säulenabschnitts 5, welches mit einer fest angeordneten Abschlussplatte 14 verschlossen ist. Die Gewindespindel 13 ist von innen her an der Abschlussplatte 14 in Richtung von B abgestützt. Ein Anschlusszapfen 15 der Gewindespindel 13 ragt in Richtung von B durch eine Öffnung der Abschlussplatte 14 nach aussen. An dem Anschlusszapfen 15 ist ein Drehknauf 16 befestigt, mit welchem die Gewindespindel 13 von aussen gedreht werden kann. Der Drehknauf 16 ist von aussen her an der Abschlussplatte 15 in Richtung von B abgestützt. Die Gewindespindel 13 ist somit bezüglich einer Bewegung in Richtung von B mit dem beweglichen Säulenabschnitt 5 zwangsgekoppelt.

Bei einer Drehung der Gewindespindel 13 wird diese je nach Drehrichtung in den Einsatz 11 hinein oder herausgedreht. Aufgrund der genannten Zwangskopplung wird dabei der bewegliche Säulenabschnitt 5 bezüglich des Einsatzes 11 und damit bezüglich des feststehenden Säulenabschnitts 6 mitbewegt. Die Gewindespindel 13 bildet somit einen Teil einer Verstellvorrichtung zur Verstellung eines Abstandes des beweglichen Säulenabschnitts 5 vom Standsockel 7.

Der beweglichen Säulenabschnitt 5 ist aussenseitig von der Manschette 4 der Heizvorrichtung 3 umfasst. Die Manschette 4 ist dabei fest am Säulenabschnitt 5 angebracht. Die Manschette 4 überlappt dabei je nach relativer Verschiebestellung der beiden Säulenabschnitte 5 und 6 teilweise mit deren Überlappungsbereich. Mit der Manschette 4 fest verbunden ist ein Gehäuse 17 der Heizvorrichtung 3. Das Gehäuse 17 erstreckt sich in Längsrichtung C der Heizvorrichtung 3 im rechten Winkel zur Richtung B von der Trägersäule 2 weg. In einer Projektion längs B fällt die Längsrichtung C mit einer Längsmittelgeraden des rechteckigen Standsockels 7 zusammen (siehe auch Fig. 3). An einem trägersäulenfernen Endbereich des Gehäuses 17 ist zum Standsockel 7 hin ein Kabel 18 zur Stromzuführung angeschlossen.

Zwischen Standsockel 7 und Heizvorrichtung 7 ist ein Schwenkarm 19 an der Trägersäule 2 angeordnet. Eine Längsrichtung D des Schwenkarms 19 erstreckt sich im rechten Winkel zur Längsrichtung B der Trägersäule 2. Der Schwenkarm 19 ist über eine Lagermanschette 20 am feststehenden Säulenabschnitt 6 um die Längsrichtung B der Trägersäule 2 schwenkbar gelagert. Die Lagermanschette 20 ist derart ausgebildet, dass eine volle Kreisbewegung des Schwenkarms 19 um die Trägersäule 2 erfolgen kann (siehe Fig. 2). In der Darstellung der Fig. 1 ist die Lagermanschette 20 zudem am Standsockel 7 abgestützt. Es versteht sich, dass die Lagermanschette 20 in anderen Ausführungsformen auch nur an der Trägersäule 2 gelagert sein kann.

An einem freien Längsende des Schwenkarms 19 ist ein Grillgutträger 21 angeordnet. Der Grillgutträger 21 ist vorliegend zum Einspannen eines Käselaibs 23 ausgebildet. Der Grillgutträger 21 ist über eine Rotationslager 22 sowie ein Kipplager 24 am Schwenkarm 19 gelagert.

Über das Rotationslager 22 ist der Grillgutträger 21 bezüglich des Schwenkarms 19 um eine Hochachse E drehbar gelagert, welche parallel zur Längsrichtung B der Trägersäule 2 ausgerichtet ist.

Das Rotationslager 22 ist derart ausgebildet, das der Grillgutträger 21 um eine volle Kreisbewegung drehbar ist.

Durch das Kipplager 24 kann der Grillgutträger 21 um eine Querachse F gekippt werden, welche senkrecht zur Achse E angeordnet ist und somit in einer Ebene parallel zur Standfläche 9 des Standsockels 7 angeordnet ist. Bei einer Drehung des Grillgutträgers 21 um E wird das Kipplager 24 mitgedreht, wodurch die Querachse F in Abhängigkeit der Drehstellung unterschiedliche Ausrichtungen aufweist. Das Kipplager 24 weist eine Feststellschraube 26 auf, mit welcher das Kipplager 24 und damit der Grillgutträger 21 in einer gewünschten Kippstellung festgestellt werden kann.

Der Grillgutträger 21 weist beidseitig Handgriffe 25 auf, an welchen er von einem Benutzer manipuliert werden kann. Um ein Verkippen um F zu erleichtern, sind die Handgriffe 25 von der Achse F beabstandet angeordnet.

Figur 2 zeigt einen Ausschnitt eines Querschnitts durch die Trägersäule 2 in einer Schnittebene G, welche senkrecht zur Längsrichtung B angeordnet ist. Die Schnittebene G ist im Überlappungsbereich des bewegliche Säulenabschnitts 5 und des feststehenden Säulenabschnitt 6 unterhalb eines sockelnahen Längsendes der Gewindespindel 13 angeordnet (siehe Fig. 1). Die Blickrichtung ist längs B zum Standsockel 7 hin.

Figur 3 zeigt eine Draufsicht auf die Grillvorrichtung 1 in Richtung von B. Die Trägersäule 2 ist in einem Randbereich bei einer kürzeren Seite und bezüglich dieser mittig am rechteckig ausgebildeten Standsockel 7 angeordnet. Die Heizvorrichtung 3 erstreckt sich mit ihrer Längsrichtung C parallel zu den längeren Seiten des Standsockels 7 von der Trägersäule 2 weg. Die Heizvorrichtung 3 ragt mit einem freien Endbereich über den Bereich des Standsockels 7 hinaus. In diesem Bereich ist die Kabelzuführung 18 angeordnet (in Fig. 3 nicht dargestellt). Das Gehäuse 17 der Heizvorrichtung weist zwei in Richtung von C angeordnete Seitenwände 27 und 28 auf. Die Seitenwände 27 und 28 laufen zum Standsockel 7 hin auseinander, sodass sich senkrecht zu C ein trapezförmiger Querschnitt des Gehäuses 17 ergibt (siehe Fig. 4). Die Seitenwände 27 und 28 bilden einen Reflektor für die Hitzestrahlung einer Heizspirale (nicht dargestellt) der Heizvorrichtung 3, welche im Gehäuse 17 angeordnet ist. Durch die Ausrichtung der Seitenwände 27 und 28 wird seitlich abgestrahlte Hitzestrahlung in Richtung zum Grillgut, d.h. vorliegend zum Käselaib 23 hin reflektiert.

Figur 4 zeigt eine Ansicht in Richtung C der Heizvorrichtung 3 auf die Grillvorrichtung 1. Dabei ist der Grillgutträger 21 in zwei Stellungen dargestellt, einmal in der Stellung gemäss der Darstellung der Fig. 1 (durchgezogen) und einmal in einer ausgeschwenkten Stellung zur Ausgabe des Grillguts (gestrichelt). In der ausgeschwenkten Stellung ist der Schwenkarm 19 um die Längsrichtung B der Trägersäule 2 verschwenkt, sodass der Grillgutträger 21 zumindest teilweise über den Bereich des Standsockels 7 hinausreicht. Der Grillgutträger 21 ist zudem um die Kippachse F um einen Kippwinkel α gekippt. Das Kipplager 24 und/oder der Grillgutträger 21 sind derart ausgebildet, dass ein maximaler Kippwinkel αₘₐₓ von bevorzugt 30° vorgegeben ist. Zum Verkippen muss die Feststellschraube 26 gelöst werden. Das Grillgut kann somit auf einfache Weise auf einen auf der Tischplatte 8 angeordneten Teller 29 abgestrichen werden.

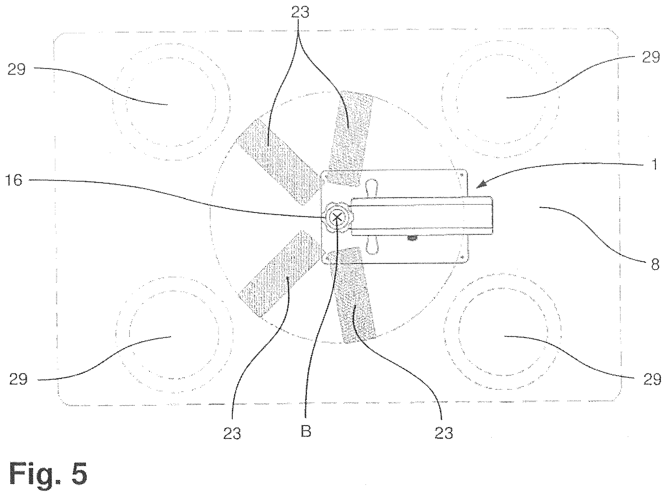

Figur 5 zeigt eine Draufsicht in Richtung von B auf die Grillvorrichtung 1 in einer Anordnung auf der Tischplatte 8. Die Grillvorrichtung 1 ist mit der Trägersäule 2 weitgehend zentral auf der Tischplatte 8 angeordnet. Der Grillgutträger 21 ist in verschiedene Schwenkstellungen ausgeschwenkt, wobei die unterschiedlichen Schwenkstellungen nur durch den Käselaib 23 angedeutet sind. Es erschliesst sich unmittelbar, dass die Schwenkbarkeit des Schwenkarms 19 um einen Vollkreis die Möglichkeit eröffnet, das Grillgut auf einfache Weise an mehrere, um die Grillvorrichtung 1 herum auf der Tischplatte 8 angeordnete Teller 29 auszugeben. Ebenso erschliesst sich aus der Darstellung der Fig. 5, dass der Drehknauf 16 von allen Seiten her gut zugänglich ist, sodass die Grillvorrichtung 1 von jedem Benutzer am Tisch gleichermassen gut zum Verstellen der Heizvorrichtung 3 zugänglich ist.

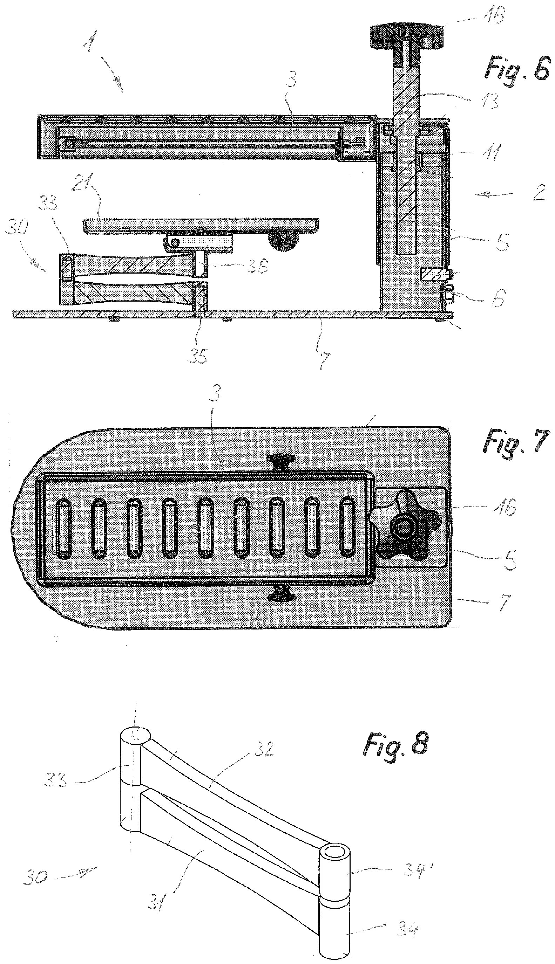

Die Figuren 6 und 7 zeigen ein alternatives Ausführungsbeispiel einer Grillvorrichtung 1 mit einer Trägersäule 2, welche funktional die gleichen Eigenschaften hat wie beim Ausführungsbeispiel gemäss Fig. 1. Ein beweglicher Säulenabschnitt 5 und ein feststehender Säulenabschnitt 6 greifen teleskopartig ineinander, wobei eine Gewindespindel 13 in eine komplementäre Gewindebohrung im Einsatz 11 eingreift. Die Höhenverstellung der Heizvorrichtung 3 erfolgt über den Drehknauf 16.

Der Schwenkarm ist hier jedoch als Doppelschwenkarm 30 ausgebildet, der aus einem unteren Teilarm 31 und einem oberen Teilarm 32 (Fig. 8) besteht. Die beiden Teilarme sind an je einem Ende um eine Gelenkachse 33 schwenkbar miteinander verbunden. An den gegenüberliegenden Enden der Teilarme sind Gelenkhülsen 34, 34' angeordnet. Der untere Teilarm 31 ist an einem Bolzen 35 am Standsockel 7 angelenkt. Der obere Teilarm 32 ist ebenfalls gelenkig mit dem Grillgutträger 21 verbunden, wobei ein Bolzen 36 in die Gelenkhülse 34' eingreift. Ersichtlicherweise wäre es auch denkbar, dass der untere Teilarm 31 nicht am Standsockel 7, sondern an der Trägersäule 2 angelenkt ist.

## Patentansprüche

1. Grillvorrichtung (1), insbesondere zur Zubereitung von Raclette, umfassend
a) einen Standsockel (7),
b) eine ortsfest am Standsockel (7) angeordneten Trägersäule (2) mit einer Längsrichtung (B),
c) eine Heizvorrichtung (3), welche an der Trägersäule (2) angeordnet ist, wobei
d) die Heizvorrichtung (3) zum Einstellen eines gewünschten Abstands zwischen der Heizvorrichtung (3) und dem Grillgutträger (21) längs der Trägersäule (2) durch einen Benutzer verstellbar angeordnet ist,
e) die Trägersäule (2) zweiteilig ausgebildet ist, und wobei
f) ein beweglicher Säulenabschnitt (5) der Trägersäule (2), an welchem die Heizvorrichtung (3) angeordnet ist, gegenüber einem bezüglich des Standsockels (7) feststehenden Säulenabschnitt (6) der Trägersäule (2) in deren Längsrichtung (B) verschiebbar geführt ist,
**dadurch gekennzeichnet, dass** die Grillvorrichtung ferner einen Schwenkarm (19) mit einem Grillgutträger (21), welcher zwischen der Heizvorrichtung (3) und dem Standsockel (7) an der Trägersäule (2) angeordnet ist, umfasst, wobei der Schwenkarm (19) als Ausleger ausgebildet ist und derart, insbesondere an der Trägersäule (2), gelagert ist, dass der Grillgutträger (21) in einer vollen Kreisbewegung um eine Längsrichtung der Trägersäule (2) schwenkbar ist, und,
dass der Grillgutträger (21) um zwei unterschiedliche Achsen (E, F), bezüglich des Schwenkarms (19) schwenkbar, am Schwenkarm (19) gelagert ist.

2. Grillvorrichtung (1) nach Anspruch 1, **dadurch gekennzeichnet, dass** der bewegliche Säulenabschnitt (5) als Hohlsäule ausgebildet ist und teleskopartig verschiebbar an dem feststehenden Säulenabschnitt (6) geführt ist, wobei insbesondere der als Hohlsäule ausgebildete bewegliche Säulenabschnitt (5) an einem sockelfernen Ende stirnseitig abgeschlossen ist.

3. Grillvorrichtung (1) nach einem der Ansprüche 1 oder 2, **dadurch gekennzeichnet, dass** ein Querschnitt der Trägersäule (2), insbesondere des beweglichen Säulenabschnitts (5) und/oder des feststehenden Säulenabschnitts (6), rechteckig, insbesondere quadratisch ist.

4. Grillvorrichtung (1) nach einem der Ansprüche 1 bis 3, **dadurch gekennzeichnet, dass** der bewegliche Säulenabschnitt (5) und der feststehende Säulenabschnitt (6) der Trägersäule (2) über eine Gewindespindel (13) verbunden sind, welche um eine Spindelachse drehbar am beweglichen Säulenabschnitt (5) abgestützt ist und in ein komplementär ausgebildetes Gewinde (12), welches fest am feststehenden Säulenabschnitt (6) angeordnet ist, eingreift.

5. Grillvorrichtung (1) nach Anspruch 4, **dadurch gekennzeichnet, dass** in einem sockelfernen Endbereich der Trägersäule (2) ein Drehknauf (16) angeordnet ist, mit welchem die Gewindespindel (13) von einem Benutzer um die Spindelachse drehbar ist.

6. Grillvorrichtung (1) nach Anspruch 5, **dadurch gekennzeichnet, dass** der Drehknauf (16) direkt auf der Gewindespindel (13) sitzt und die Spindelachse koaxial zu der Längsachse (B) der Trägersäule angeordnet ist.

7. Grillvorrichtung (1) nach einem der Ansprüche 4 bis 6, **dadurch gekennzeichnet, dass** die Gewindespindel (13) zumindest teilweise in einem Innenraum des beweglichen Säulenabschnitts (5) verläuft.

8. Grillvorrichtung (1) nach einem der Ansprüche 1 bis 7, **dadurch gekennzeichnet, dass** die Heizvorrichtung (3) mit einer Manschette (4) am beweglichen Säulenabschnitt (5) befestigt ist, wobei die Manschette (4) den beweglichen Säulenabschnitt (5) umfangsseitig vollständig umgreift und fest mit diesem verbunden ist.

9. Grillvorrichtung (1) nach einem der Ansprüche 1 bis 8, **dadurch gekennzeichnet, dass** die Heizvorrichtung (3) ein zum Standsockel (7) hin offenes Gehäuse (17) umfasst, welches zwei zum Standsockel (7) hin auseinander laufende Seitenwände (27, 28) aufweist.

10. Grillvorrichtung (1) nach einem der Ansprüche 1 bis 9, **dadurch gekennzeichnet, dass** die Heizvorrichtung (3) als Ausleger ausgebildet ist und von der Trägersäule (2) auskragt.

11. Grillvorrichtung (1) nach einem der Ansprüche 1 bis 10, **dadurch gekennzeichnet, dass** die Heizvorrichtung (3) elektrisch betreibbar ist und dass eine Zuführung von elektrischer Energie über einen Anschluss an einem trägersäulenfernen Bereich der Heizvorrichtung (3) erfolgt.

12. Grillvorrichtung (1) nach einem der Ansprüche 1 bis 11, **dadurch gekennzeichnet, dass** die Längsrichtung (B) der Trägersäule (2) im Wesentlichen senkrecht zu einer Standfläche (9) des Standsockels (7) angeordnet ist.

13. Grillvorrichtung (1) nach einem der Ansprüche 1 bis 12, **dadurch gekennzeichnet, dass** eine der zwei unterschiedlichen Achsen (E, F) eine zur Längsrichtung (B) der Trägersäule (2) parallele Hochachse (E) ist und eine zweite der zwei unterschiedlichen Achsen (E, F) eine zur Längsrichtung (B) der Trägersäule (2) senkrechte Querachse (F), wobei vorzugsweise die Hochachse (E) bezüglich des Schwenkarms (19) fest ausgerichtet ist und die Querachse (F) bezüglich des Schwenkarms (19) um die Hochachse (E) drehbar ist.

14. Grillvorrichtung nach einem der Ansprüche 1 bis 13, **dadurch gekennzeichnet, dass** der Schwenkarm ein Doppelschwenkarm (30) bestehend aus zwei um eine Gelenkachse (33) gelenkig miteinander verbundenen Teilarmen (31,32) ist, wobei der eine Teilarm (31) gelenkig mit dem Standsockel (7) oder mit der Tragsäule (2) und der andere Teilarm (32) insbesondere gelenkig mit dem Grillgutträger (21) verbunden ist.

## Claims

1. Grill device (1), in particular for the preparation of raclette, comprising
a) a standing base (7),
b) a carrier column (2), with a longitudinal direction (B), which is arranged in a positionally fixed manner on the standing base (7),
c) a heating device (3) which is arranged on the carrier column (2), wherein
d) in order to set a desired spacing between the heating device (3) and the grilling-food carrier (21), the heating device (3) is arranged so as to be adjustable along the carrier column (2) by a user,
e) the carrier column (2) is of two-part design, and wherein
f) a movable column portion (5) of the carrier column (2) on which the heating device (3) is arranged is guided with respect to a column portion (6), which is fixed in relation to the standing base (7), of the carrier column (2) so as to be displaceable in the longitudinal direction (B) thereof,
**characterized in that** the grill device further comprises a pivoting arm (19) with a grilling-food carrier (21) which is arranged between the heating device (3) and the standing base (7) on the carrier column (2), wherein the pivoting arm (19) is designed as a cantilever and is mounted, in particular on the carrier column (2), in such a way that the grilling-food carrier (21) is pivotable in a full circular movement about a longitudinal direction of the carrier column (2), and
**in that** the grilling-food carrier (21) is mounted on the pivoting arm (19) so as to be pivotable with respect to the pivoting arm (19) about two different axes (E, F).

2. Grill device (1) according to Claim 1, **characterized in that** the movable column portion (5) is designed as a hollow column and is guided in a telescopically displaceable manner on the fixed column portion (6), wherein in particular the movable column portion (5) designed as a hollow column is terminally closed off at a base-remote end.

3. Grill device (1) according to either of Claims 1 and 2, **characterized in that** a cross section of the carrier column (2), in particular of the movable column portion (5) and/or of the fixed column portion (6), is rectangular, in particular square.

4. Grill device (1) according to one of Claims 1 to 3, **characterized in that** the movable column portion (5) and the fixed column portion (6) of the carrier column (2) are connected via a threaded spindle (13) which is supported on the movable column portion (5) so as to be rotatable about a spindle axis and engages in a thread (12) of complementary form which is arranged fixedly on the fixed column portion (6).

5. Grill device (1) according to Claim 4, **characterized in that** a rotary knob (16) is arranged in a base-remote end region of the carrier column (2), by means of which rotary knob the threaded spindle (13) can be rotated about the spindle axis by a user.

6. Grill device (1) according to Claim 5, **characterized in that** the rotary knob (16) is seated directly on the threaded spindle (13) and the spindle axis is arranged coaxially to the longitudinal axis (B) of the carrier column.

7. Grill device (1) according to one of Claims 4 to 6, **characterized in that** the threaded spindle (13) extends at least partially in an interior of the movable column portion (5).

8. Grill device (1) according to one of Claims 1 to 7, **characterized in that** the heating device (3) is fastened to the movable column portion (5) by a sleeve (4), wherein the sleeve (4) engages completely around the circumference of the movable column portion (5) and is fixedly connected thereto.

9. Grill device (1) according to one of Claims 1 to 8, **characterized in that** the heating device (3) comprises a housing (17) which is open towards the standing base (7) and which has two side walls (27, 28) which diverge towards the standing base (7).

10. Grill device (1) according to one of Claims 1 to 9, **characterized in that** the heating device (3) is designed as a cantilever and projects from the carrier column (2).

11. Grill device (1) according to one of Claims 1 to 10, **characterized in that** the heating device (3) can be electrically operated, and **in that** electrical power is supplied via a connection at a carrier-column-remote region of the heating device (3).

12. Grill device (1) according to one of Claims 1 to 11, **characterized in that** the longitudinal direction (B) of the carrier column (2) is arranged substantially perpendicularly to a standing surface (9) of the standing base (7).

13. Grill device (1) according to one of Claims 1 to 12, **characterized in that** one of the two different axes (E, F) is a vertical axis (E) which is parallel to the longitudinal direction (B) of the carrier column (2), and a second of the two different axes (E, F) is a transverse axis (F) which is perpendicular to the longitudinal direction (B) of the carrier column (2), wherein preferably the vertical axis (E) is oriented fixedly with respect to the pivoting arm (19) and the transverse axis (F) is rotatable with respect to the pivoting arm (19) about the vertical axis (E).

14. Grill device according to one of Claims 1 to 13, **characterized in that** the pivoting arm is a double-pivoting arm (30) consisting of two part-arms (31, 32) which are connected to one another so as to be articulated about an articulation pin (33), wherein one part-arm (31) is articulatedly connected to the standing base (7) or to the carrier column (2) and the other part-arm (32) is in particular articulatedly connected to the grilling-food carrier (21).

## Revendications

1. Dispositif de gril (1), en particulier pour préparer une raclette, comprenant :
a) un socle de base (7),
b) une colonne de support (2) disposée fixement sur le socle de base (7) avec une direction longitudinale (B),
c) un dispositif de chauffage (3) qui est disposé sur la colonne de support (2),
d) le dispositif de chauffage (3) étant disposé de manière réglable par un utilisateur pour ajuster une distance souhaitée entre le dispositif de chauffage (3) et le support de produit à griller (21) le long de la colonne de support (2),
e) la colonne de support (2) étant réalisée en deux parties, et
f) une portion de colonne mobile (5) de la colonne de support (2) au niveau de laquelle le dispositif de chauffage (3) est disposé, étant guidée de manière déplaçable dans sa direction longitudinale (B) par rapport à une portion de colonne (6) de la colonne de support (2) fixe par rapport au socle de base (7),
**caractérisé en ce que** le dispositif de gril comprend en outre un bras pivotant (19) avec un support de produit à griller (21), qui est disposé entre le dispositif de chauffage (3) et le socle de base (7) sur la colonne de support (2), le bras pivotant (19) étant réalisé sous forme de bras de potence et étant supporté notamment sur la colonne de support (2) de telle sorte que le support de produit à griller (21) puisse pivoter avec un mouvement circulaire complet autour d'une direction longitudinale de la colonne de support (2), et **en ce que** le support de produit à griller (21) est supporté sur le bras pivotant (19) de manière à pouvoir pivoter autour de deux axes différents (E, F) par rapport au bras pivotant (19).

2. Dispositif de gril (1) selon la revendication 1, **caractérisé en ce que** la portion de colonne mobile (5) est réalisée sous forme de colonne creuse et est guidée de manière déplaçable télescopiquement sur la portion de colonne fixe (6), la portion de colonne mobile (5) réalisée sous forme de colonne creuse est fermée du côté frontal d'une extrémité éloignée du socle.

3. Dispositif de gril (1) selon l'une quelconque des revendications 1 et 2, **caractérisé en ce qu**'une section transversale de la colonne de support (2), en particulier de la portion de colonne mobile (5) et/ou de la portion de colonne fixe (6), est rectangulaire, en particulier carrée.

4. Dispositif de gril (1) selon l'une quelconque des revendications 1 à 3, **caractérisé en ce que** la portion de colonne mobile (5) et la portion de colonne fixe (6) de la colonne de support (2) sont connectées par une broche filetée (13) qui est supportée sur la portion de colonne mobile (5) de manière à pouvoir tourner autour d'un axe de broche et vient en prise dans un filetage (12) réalisé de manière complémentaire, qui est disposé fixement sur la portion de colonne (6).

5. Dispositif de gril (1) selon la revendication 4, **caractérisé en ce que,** dans une région d'extrémité de la colonne de support (2) éloignée du socle, est disposé un bouton tournant (16) avec lequel la broche filetée (13) peut être tournée par l'utilisateur autour de l'axe de broche.

6. Dispositif de gril (1) selon la revendication 5, **caractérisé en ce que** le bouton tournant (16) repose directement sur la broche filetée (13) et l'axe de la broche filetée est disposé coaxialement par rapport à l'axe longitudinal (B) de la colonne de support.

7. Dispositif de gril (1) selon l'une quelconque des revendications 4 à 6, **caractérisé en ce que** la broche filetée (13) s'étend au moins en partie dans un espace interne de la portion de colonne mobile (5).

8. Dispositif de gril (1) selon l'une quelconque des revendications 1 à 7, **caractérisé en ce que** le dispositif de chauffage (3) est fixé avec une manchette (4) à la portion de colonne mobile (5), la manchette (4) venant en prise complètement du côté périphérique autour de la portion de colonne mobile (5) et étant connectée fixement à celle-ci.

9. Dispositif de gril (1) selon l'une quelconque des revendications 1 à 8, **caractérisé en ce que** le dispositif de chauffage (3) comprend un boîtier (17) ouvert vers le socle de base (7), qui présente deux parois latérales (27, 28) s'écartant l'une de l'autre vers le socle de base (7).

10. Dispositif de gril (1) selon l'une quelconque des revendications 1 à 9, **caractérisé en ce que** le dispositif de chauffage (3) est réalisé sous forme de bras de potence et fait saillie depuis la colonne de support (2).

11. Dispositif de gril (1) selon l'une quelconque des revendications 1 à 10, **caractérisé en ce que** le dispositif de chauffage (3) peut être alimenté en courant électrique et **en ce qu'**un apport en énergie électrique s'effectue par le biais d'un raccordement à une région éloignée de la colonne de support du dispositif de chauffage (3).

12. Dispositif de gril (1) selon l'une quelconque des revendications 1 à 11, **caractérisé en ce que** la direction longitudinale (B) de la colonne de support (2) est essentiellement perpendiculaire à une surface de base (9) du socle de base (7).

13. Dispositif de gril (1) selon l'une quelconque des revendications 1 à 12, **caractérisé en ce que** l'un des deux axes différents (E, F) est un axe vertical (E) parallèle à la direction longitudinale (B) de la colonne de support (2) et un deuxième des deux axes différents (E, F) est un axe transversal (F) perpendiculaire à la direction longitudinale (B) de la colonne de support (2), l'axe vertical (E) étant orienté de préférence fixement par rapport au bras pivotant (19) et l'axe transversal (F) pouvant tourner par rapport au bras pivotant (19) autour de l'axe vertical (E).

14. Dispositif de gril selon l'une quelconque des revendications 1 à 13, **caractérisé en ce que** le bras pivotant est un double bras pivotant (30) constitué de deux bras partiels (31, 32) connectés l'un à l'autre de manière articulée autour d'un axe d'articulation (33), l'un des bras partiels (31) étant connecté de manière articulée au socle de base (7) ou à la colonne de support (2) et l'autre bras partiel (32) étant connecté de manière articulée notamment au support de produit à griller (21).
